# EUROPEAN PATENT APPLICATION

(11) **EP 4 715 223 A1**
(43) Date of publication of application: **25.03.2026**
(21) Application number: 25195063.0
(22) Date of filing: 11.08.2025
(51) Int. Cl.: F16B 5/02, F16B 41/00, F16B 7/04

(54) **CAPTIVE FASTENER SYSTEM**

(30) Priority: 19.09.2024 US 202418890186
(71) Applicant: The Boeing Company, Arlington, VA 22202 (US)
(72) Inventor: ARMSTRONG, Chase, Arlington, 22202 (US); DAVIS, James L., Arlington, 22202 (US)
(74) Representative: St Clair Jones, Gregory Arthur Langley

(57) **Abstract**

A captive fastener system and methods of installing captive fasteners are presented. A captive fastener system comprises an expandable opening with an initial diameter connected to a channel; and the channel. The channel has an internal diameter larger than the initial diameter and an exit diameter configured to retain a head of a fastener inside the channel.

## Description

### CROSS-REFERENCE TO RELATED APPLICATION

This application is related to the following U.S. Patent Application entitled "Manifold for Connecting Corrugated Conduit," Serial No. 18/890,186, attorney docket no. 24-0492-US-NP, filed even date hereof, assigned to the same assignee, and incorporated herein by reference in its entirety.

### BACKGROUND INFORMATION

### 1. Field:

The present disclosure relates generally to connecting structures and more specifically to captive fastener systems for joining structures.

### 2. Background:

Loose fasteners can present potential foreign object debris (FOD) in assembly and maintenance. Foreign object debris (FOD) can cause undesirable effects to structures or personnel.

Therefore, it would be desirable to have a method and apparatus that takes into account at least some of the issues discussed above, as well as other possible issues. For example, it would be desirable to present methods and apparatus for securing fasteners in structures.

### SUMMARY

An embodiment of the present disclosure provides a captive fastener system. The captive fastener system comprises an expandable opening with an initial diameter connected to a channel, and the channel. The channel has an internal diameter larger than the initial diameter and an exit diameter configured to retain a head of a fastener inside the channel.

An embodiment of the present disclosure provides a method of installing a captive fastener. A shank of a fastener is placed through an expandable opening and into a channel of a structure. A head of the fastener is pressed through the expandable opening. The head of the fastener is retained within the channel by features of the channel.

An embodiment of the present disclosure provides a captive fastener system. The captive fastener system comprises a fastener with a head positioned within a channel, and the channel. The channel has an expandable opening configured to allow entry of the head of the fastener and limit exit of the head of the fastener and an exit diameter configured to allow a shaft of the fastener to extend through the exit diameter and prevent exit of the head of the fastener.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of fibers extending through corrugated conduits and manifolds in accordance with an illustrative embodiment;
**Figure 4** is an illustration of an isometric view of a manifold and adapters in accordance with an illustrative embodiment;
**Figure 5** is an illustration of a partially exploded side view of a manifold and adapters in accordance with an illustrative embodiment;
**Figure 6** is an illustration of an exploded isometric view of a manifold and adapters in accordance with an illustrative embodiment;
**Figure 7** is an illustration of a side view of multiple adapters in accordance with an illustrative embodiment;
**Figure 8** is an illustration of a bottom view of a manifold with anti-rotation features in accordance with an illustrative embodiment;
**Figure 9** is an illustration of an exploded isometric view of a manifold and adapters in accordance with an illustrative embodiment;
**Figure 10** is an illustration of a side view of a fastener prior to installation as a captive fastener in accordance with an illustrative embodiment;
**Figure 11** is an illustration of a cross-sectional view of a fastener prior to installation as a captive fastener in a channel in accordance with an illustrative embodiment;
**Figure 12** is an illustration of a cross-sectional view of a captive fastener within a channel in accordance with an illustrative embodiment;
**Figure 13** is an illustration of a view of a structure with a captive fastener within a channel in accordance with an illustrative embodiment;
**Figure 14** is an illustration of a block diagram of a manufacturing environment in accordance with an illustrative embodiment;
**Figure 15** is a flowchart of a method of managing fibers in accordance with an illustrative embodiment;
**Figure 16** is a flowchart of a method of installing a captive fastener in accordance with an illustrative embodiment;
**Figure 17** is an illustration of an aircraft manufacturing and service method in a form of a block diagram in accordance with an illustrative embodiment; and
**Figure 18** is an illustration of an aircraft in a form of a block diagram in which an illustrative embodiment may be implemented.

### DETAILED DESCRIPTION

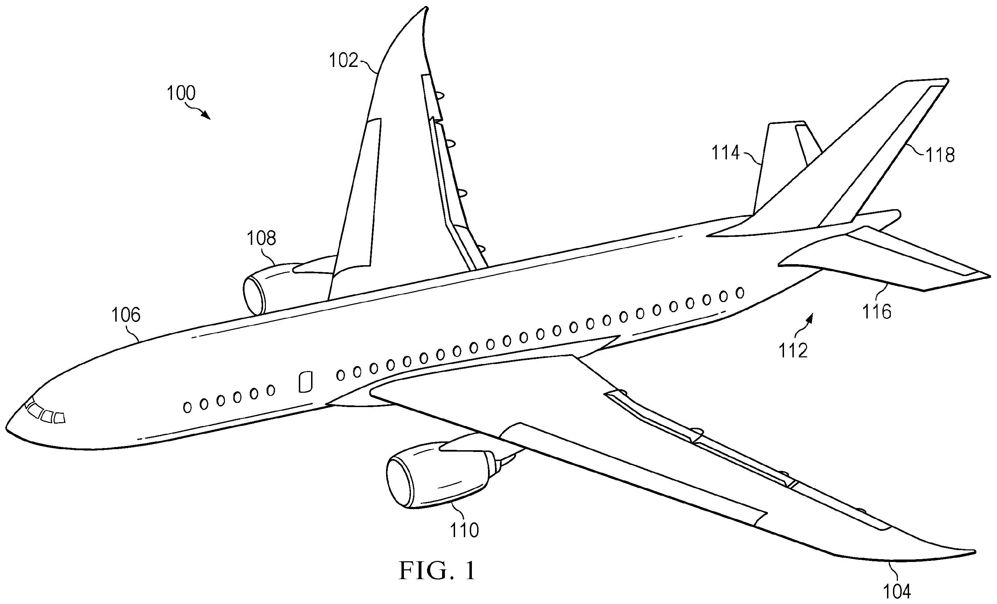

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have fibers to be managed. In some illustrative examples, systems of aircraft **100** can be joined together using captive fastener systems.

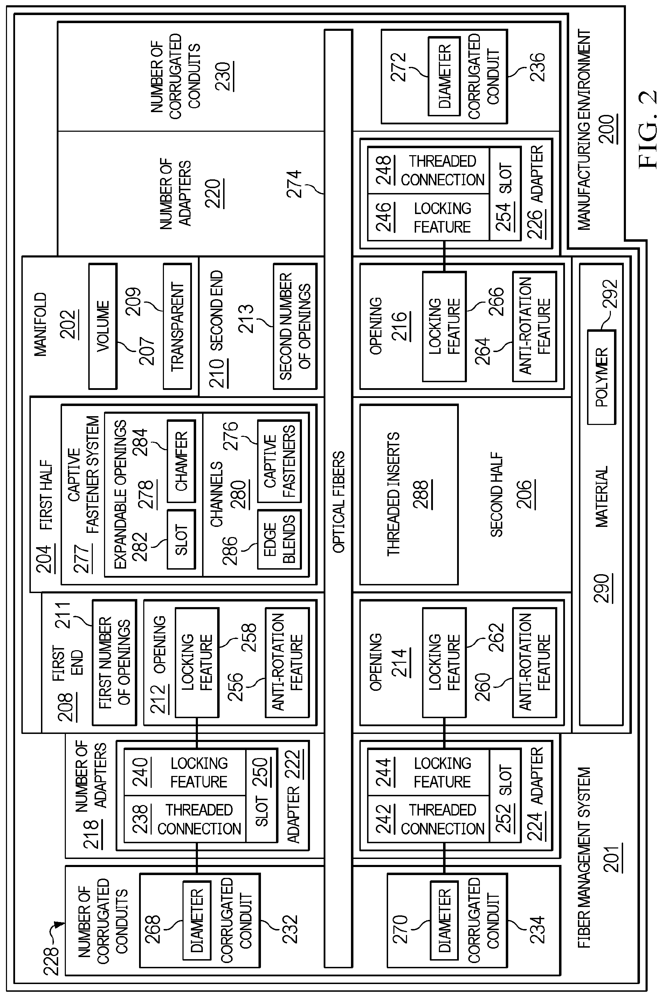

Turning now to **Figure 2****,** an illustration of a block diagram of a manufacturing environment is depicted in accordance with an illustrative embodiment. Fiber management system **201** can be created in manufacturing environment **200.** Fiber management system **201** can be utilized in manufacturing environment **200.**

Manifold **202** is configured to connect corrugated conduits. In this illustrative example, manifold **202** connects number of corrugated conduits **228** and number of corrugated conduits **230.** Manifold **202** comprises first half **204,** second half **206** removably connected to first half **204** to form volume **207** within manifold **202,** first number of openings **211** on first end **208** to access volume **207,** and second number of openings **213** on second end **210** to access volume **207.** Removing first half **204** from second half **206** cleaves each of first number of openings **211** and each of second number of openings **213.**

In this illustrative example, first number of openings **211** comprises a different quantity of openings from second number of openings **213.** A quantity of openings on each end of first end **208** and second end **210** corresponds to a respective quantity of corrugated conduits to be connected to each of first end **208** and second end **210.** In this illustrative example, first number of openings **211** comprises two openings, opening **212** and opening **214.** In this illustrative example, second number of openings **213** comprises one opening, opening **216.** In this illustrative example, number of corrugated conduits **228** connected to first end **208** of manifold **202** comprises two corrugated conduits, corrugated conduit **232** and corrugated conduit **234.** In this illustrative example, number of corrugated conduits **230** connected to second end **210** of manifold **202** comprises one corrugated conduit, corrugated conduit **236.** In this illustrative example, manifold **202** can be described as a 2:1 manifold.

First number of openings **211** comprises locking features configured to retain an adapter. In this illustrative example, opening **212** comprises locking feature **258** and opening **214** comprises locking feature **262.** Locking feature **258** is configured to retain adapter **222.** Locking feature **258** interacts with locking feature **240** to retain adapter **222.** Locking feature **258** and locking feature **240** are non-threaded. Locking feature **262** is configured to retain adapter **224.** Locking feature **262** interacts with locking feature **244** to retain adapter **224.** Locking feature **262** and locking feature **244** are non-threaded.

Second number of openings **213** comprises locking features configured to retain an adapter. In this illustrative example, opening **216** comprises locking feature **266.** Locking feature **266** is configured to retain adapter **226.** Locking feature **266** interacts with locking feature **246** to retain adapter **226.** Locking feature **266** is non-threaded.

In this illustrative example, the locking features are present on both first half **204** and second half **206.** In some illustrative examples, the locking features are operational when first half **204** and second half **206** are removably connected. In some illustrative examples, the locking features comprise a series of grooves.

In some illustrative examples, first number of openings **211** comprises an anti-rotation feature. In this illustrative example, opening **212** comprises anti-rotation feature **256** and opening **214** comprises anti-rotation feature **260.** In this illustrative example, opening **216** comprises anti-rotation feature **264.** Anti-rotation features can comprise a protrusion configured to interaction with a respective adapter.

In some illustrative examples, number of adapters **218** comprise slots. As depicted, anti-rotation feature **256** interacts with slot **250** in adapter **222.** As depicted, anti-rotation feature **260** interacts with slot **252** in adapter **224.** As depicted, anti-rotation feature **264** interacts with slot **254** in adapter **226.** The anti-rotation features are configured to restrict movement of respective adapters.

Each of slot **250,** slot **252,** and slot **254** can allow for fibers to be inserted into fiber management system 201 without separating manifold **202.** In some illustrative examples, slot **250,** slot **252,** and slot **254** act as keying features. In some illustrative examples, anti-rotation feature **256,** anti-rotation feature **260,** and anti-rotation feature **264** act as keying features.

In some illustrative examples, slot **250,** slot **252,** and slot **254** can reduce compression on each respective adapter. Slot **250,** slot **252,** and slot **254** can allow for manifold **202** to compress a respective adapter to hold the respective adapter within manifold **202** without undesirably damaging the respective adapter.

Material **290** of manifold **202** is selected to allow for desired operations of fiber management system **201.** In some illustrative examples, material **290** of manifold **202** is selected based on an operational environment for fiber management system **201.** In some illustrative examples, material **290** of manifold **202** is selected based on weight. In some illustrative examples, material **290** is selected to enable at least one of inspection, maintenance, or operation. In some illustrative examples, material **290** of manifold **202** is selected to allow stray beams of light from broken fiber to be visually detected. In some illustrative examples, material **290** is selected to allow for inspection of optical fibers **274** in manifold **202.** In some illustrative examples, manifold **202** comprises polymer **292.** In some illustrative examples, polymer **292** is at least one of transparent **209** or translucent.

In some illustrative examples, material **290** of manifold **202** is a non-frangible material. In some illustrative examples, material **290** of manifold **202** is a material selected to reduce or prevent shattering of manifold **202.** In some illustrative examples, material **290** of manifold **202** provides sufficient flexibility for fastening. In some illustrative examples, material **290** of manifold **202** is sufficiently compliant to allow for captive fasteners **276** to be sent through expandable openings **278.** In this illustrative example, manifold **202** comprises captive fastener system **277.** Captive fastener system **277** retains captive fasteners **276** to reduce foreign object debris. In some illustrative examples, captive fastener system **277** comprises an expandable opening with an initial diameter within one of the first half or the second half, wherein the expandable opening is connected to a channel, and wherein the channel within the first half or the second half has an internal diameter larger than the initial diameter and an exit diameter configured to retain a head of a fastener inside the channel.

In this illustrative example, expandable openings **278** are present in first half **204** of manifold **202.** To restrain captive fasteners **276,** captive fasteners **276** are sent through expandable openings **278.** In some illustrative examples, each of expandable openings **278** comprises slot **282** and chamfer **284.** A respective slot allows for captive fasteners **276** to enter through expandable openings **278.** Edge blends **286** within channels **280** can aid in retention of captive fasteners **276.** Edge blends **286** within channels **280** can allow for intentional removal of captive fasteners **276** from channels **280.**

To secure first half **204** to second half **206** of manifold **202,** captive fasteners **276** are fastened to second half **206.** In some illustrative examples, captive fasteners **276** are secured to threaded inserts **288** in second half **206.** In other illustrative examples, captive fasteners **276** are secured to threads in second half **206.**

Fiber management system **201** comprises manifold **202,** number of corrugated conduits **228,** number of corrugated conduits **230,** number of adapters **218** connecting number of corrugated conduits **228** to first end **208** of manifold **202,** and number of adapters **220** connecting number of corrugated conduits **230** to second end **210** of manifold **202.** Each of number of adapters **218** comprises a threaded connection and a non-threaded locking feature. Each of number of adapters **220** comprises a threaded connection and a non-threaded locking feature.

In some illustrative examples, at least one adapter of number of adapters **218** comprises a threaded connection with a diameter different than another adapter. In this illustrative example, adapter **222** has threaded connection **238** configured to connect to corrugated conduit **232** with diameter **268.** In this illustrative example, adapter **224** has threaded connection **242** configured to connect to corrugated conduit **234** with diameter **270.** In some illustrative examples, diameter **268** is different from diameter **270.** In some illustrative examples, although diameter **268** and diameter **270** are different, the locking features of adapter **222** and adapter **224** are the same.

In this illustrative example, threaded connection **248** is configured to connect to corrugated conduit **236.** In this illustrative example, corrugated conduit **236** has diameter **272.**

In some illustrative examples, all adapters of number of adapters **218** and number of adapters **220** have a same size locking feature configured to interface with manifold **202.** In some illustrative examples, manifold **202** comprises anti-rotation features configured to restrict movement of number of adapters **218.**

Manifold **202** is a two-piece body, variable size branch design that allows the ability to inspect, modify and, repair assembly without disassembly of other portions of the wire assembly. The illustrative examples allow for each branch to be standalone until reassembly with the manifold body. Non-threaded locking features allow for reduction or elimination of twisting for number of corrugated conduits **228** and number of corrugated conduits **230.**

In some illustrative examples, manifold **202** comprises a clear two-piece body split design that utilizes a common size locking feature for all adapters to allow the ability to easily change size while maintaining existing body design. In some illustrative examples, the locking features take the form of a number of collars.

In some illustrative examples, each threaded adapter, number of adapters **218** and number of adapters **220,** maintains a slot to allow fibers to be fed through without the need to disassemble fiber assembly. In some illustrative examples, the slot takes the form of a +/.1" split.

In this illustrative example, a captive hardware design is provided to maintain hardware within manifold **202** in the event of hardware loosening. Captive fastener system **277** maintains captive fasteners **276** within manifold **202.**

The illustrative examples can be used for any conductor and fiber cable running through conduit that has a split or junction. The illustrative examples can be used for test equipment that verifies operation of conductors and fiber cable. The illustrative examples can be used on aircraft, ships, commercial buildings, or other platforms that utilize corrugated conduits.

The illustrative examples allow for at least one of modification, inspection, or repair without disassembling the cable assembly from the connector to the Y adapter. Visual inspection of fiber in old manifold adapter area is not possible as material was not transparent nor allowed the ability to inspect easily.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, manifold **202** can have more than two openings on first end **208.** In other illustrative examples, manifold **202** can have more than one opening on second end **210.** In some illustrative examples, threaded inserts **288** are optional.

As another example, captive fasteners **276** can be optional. In some illustrative examples, manifold **202** can be fastened together without captive fastener system **277.** In some illustrative examples, when captive fasteners **276** are not utilized, expandable openings **278** are not present.

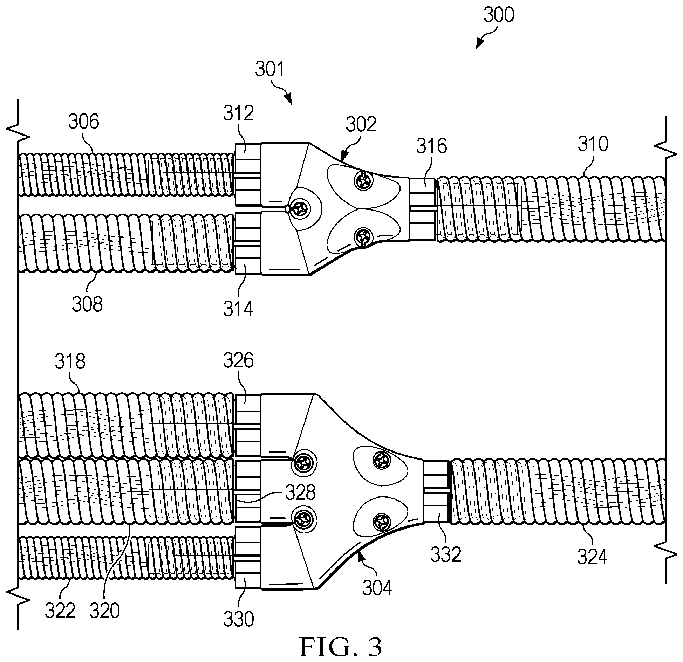

Turning now to **Figure 3****,** an illustration of fibers extending through corrugated conduits and manifolds is depicted in accordance with an illustrative embodiment. In view **300,** manifold **302** and manifold **304** can be physical implementations of manifold **202** of **Figure 2****.** Manifold **302** connects two corrugated conduits on a first end of manifold **302** to a single corrugated conduit on a second end of manifold **302.** Corrugated conduit **306** and corrugated conduit **308** are connected to a first end of manifold **302.** Corrugated conduit **310** is connected to a second end of manifold **302.** Manifold **302** may be referred to as a 2/1 manifold.

Manifold **304** connects three corrugated conduits on a first end of manifold **304** to a single corrugated conduit on a second end of manifold **304.** Corrugated conduit **318,** corrugated conduit **320,** and corrugated conduit **322** are connected to a first end of manifold **304.** Corrugated conduit **324** is connected to a second end of manifold **304.** Manifold **304** can be referred to as a 3/1 manifold.

The manifolds are connected to the corrugated conduits by adapters. A number of adapters extend into the corrugated conduits and manifold **302.** Adapter **312** connects corrugated conduit **306** to manifold **302.** Adapter **314** connects corrugated conduit **308** to manifold **302.** Adapter **316** connects corrugated conduit **310** to manifold **302.** Adapter **312,** adapter **314,** and adapter **316** can be physical implementations of number of adapters **218** and number of adapters **220** of **Figure 2****.**

A number of adapters extend into the corrugated conduits and manifold **304.** Adapter **326** connects corrugated conduit **318** to manifold **304.** Adapter **328** connects corrugated conduit **320** to manifold **304.** Adapter **330** connects corrugated conduit **322** to manifold **304.** Adapter **332** connects corrugated conduit **324** to manifold **304.** Adapter **326,** adapter **328,** adapter **330,** and adapter **332** can be physical implementations of number of adapters **218** and number of adapters **220** of **Figure 2****.**

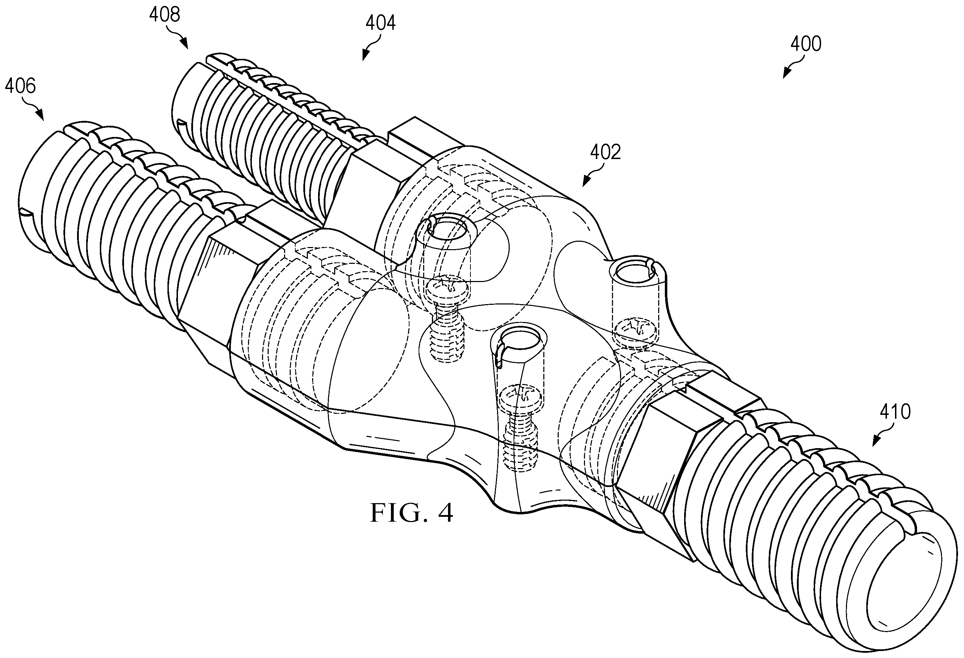

Turning now to **Figure 4****,** an illustration of an isometric view of a manifold and adapters is depicted in accordance with an illustrative embodiment. Manifold 402 in view **400** is a physical implementation of manifold **202** of **Figure 2****.** In some illustrative examples, manifold **402** is the same as manifold **302** of **Figure 3****.** Manifold **402** can be used within aircraft **100** to run wires, such as electrical wires or fiber optics. In some illustrative examples, manifold **402** can be a portion of maintenance equipment used for testing of components of aircraft **100.**

Number of adapters **404** are connected to manifold **402.** Number of adapters **404** includes adapter **406** and adapter **408** connected to manifold **402.** Number of adapters **404** includes adapter **410** connected to manifold **402.**

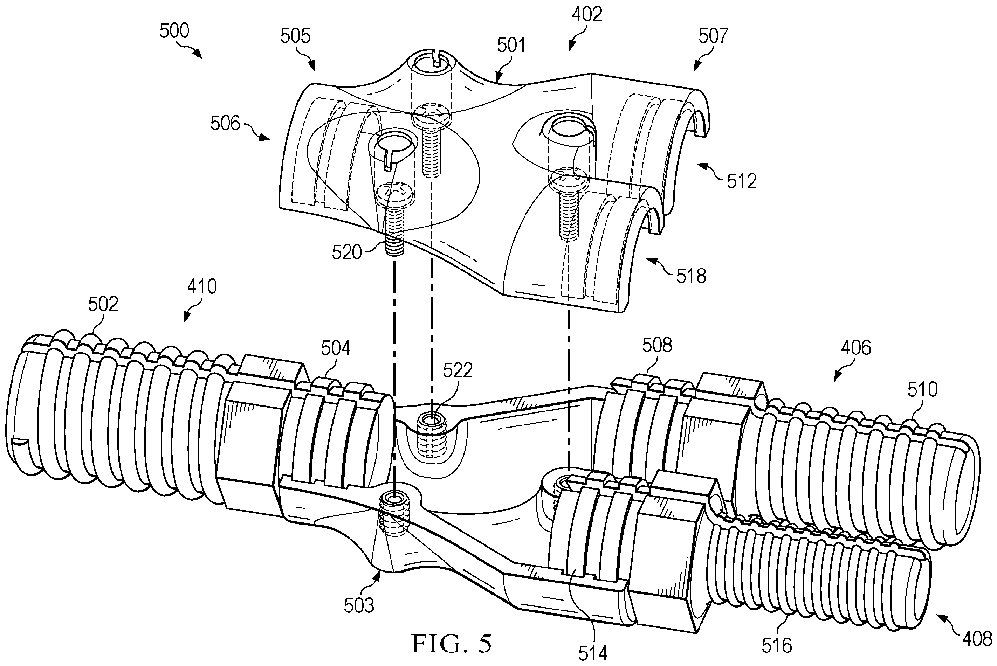

Turning now to **Figure 5****,** an illustration of a partially exploded side view of a manifold and adapters is depicted in accordance with an illustrative embodiment. View **500** is a partially exploded view of manifold **402.** In view **500,** manifold **402** is depicted as transparent for ease of explanation. Manifold **402** can be manufactured from any desirable material having any desirable color or opacity. In this illustrative example, manifold **402** comprises first half **501** and second half **503.**

In view **500,** number of adapters **404** is more clearly depicted. In this illustrative example, number of adapters **404** comprise more than one diameter. Each of number of adapters **404** has a same size connection for engaging with manifold **402.** Each of number of adapters can be removed and replaced with a different adapter if a different diameter adapter is desired.

Adapter **410** comprises threaded connection **502** and locking feature **504.** Locking feature **504** is non-threaded. In some illustrative examples, locking feature **504** can take another desired shape to retain adapter **410** within manifold **402** without threads. Locking feature **504** is the same as locking feature **508** and locking feature **514.** When a different type of locking feature is used for adapter **410,** all adapters for manifold **402** will have the same type of locking feature so that adapters are universal.

In this illustrative example, locking feature **504** takes the form of cylindrical protrusions. The cylindrical protrusions of locking feature **504** retain adapter **410** within opening **506** of manifold **402.** In this illustrative example, opening **506** is on first end **505** of manifold **402.** When manifold **402** is connected, adapter **406** and adapter **408** are connected to first end **505** of manifold **402.** In this illustrative example, the locking features comprise a series of grooves. In these illustrative examples, each of the adapters have a same size locking feature configured to interface with manifold **402.**

In this illustrative example, locking feature **508** takes the form of cylindrical protrusions. The cylindrical protrusions of locking feature **508** retain adapter **406** within opening **512** of manifold **402.** In this illustrative example, opening **512** is on second end **507** of manifold **402.** When manifold **402** is connected, adapter **410** is connected to second end **507** of manifold **402.**

In this illustrative example, locking feature **514** takes the form of cylindrical protrusions. The cylindrical protrusions of locking feature **514** retain adapter **408** within opening **518** of manifold **402.** In this illustrative example, the protrusions are not continuous. In this illustrative example, opening **518** is on second end **507** of manifold **402.**

Adapter **406** comprises locking feature **508** and threaded connection **510.** Threaded connection **502** and threaded connection **510** do not have the same diameter, but they could as the application demands. Adapter **408** comprises locking feature **514** and threaded connection **516.** Threaded connection **516** has a smaller diameter than threaded connection **510** and threaded connection **502.**

In this illustrative example, each of opening **506,** opening **512,** and opening **518** have locking features to interface with locking features of the adapters. The locking features of manifold **402** are operational when first half **501** and second half **503** are removably connected.

In this illustrative example, captive fasteners **520** are used to connect first half **501** to second half **503** of manifold **402.** Captive fasteners **520** are restrained within channels of first half **501** of manifold **402.** Captive fasteners **520** connect to threaded inserts **522** in second half **503.** Although threaded inserts **522** are used in this illustrative example, in other structures, captive fasteners **520** can be connected into threads of second half **503.**

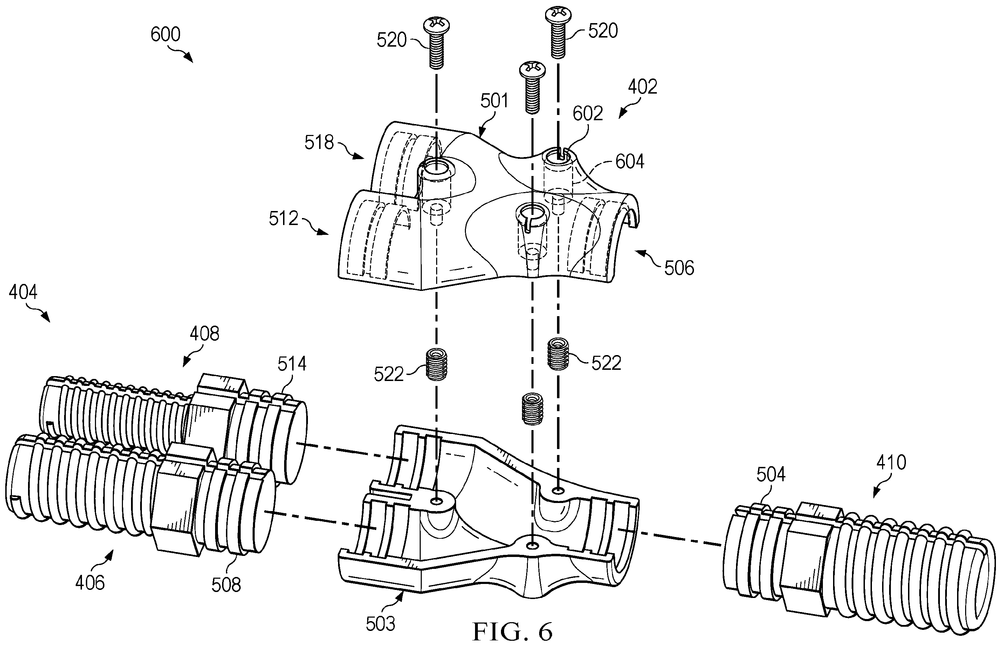

Turning now to **Figure 6****,** an illustration of an exploded isometric view of a manifold and adapters is depicted in accordance with an illustrative embodiment. In view **600,** captive fasteners **520** are shown exploded out of expandable openings **602** in first half **501.** To install captive fasteners **520,** captive fasteners **520** are pressed into expandable openings **602.** The shafts of captive fasteners **520** are sent through expandable openings **602** and into channels **604.** The heads of captive fasteners **520** are sent through expandable openings **602** and then retained within channels **604.**

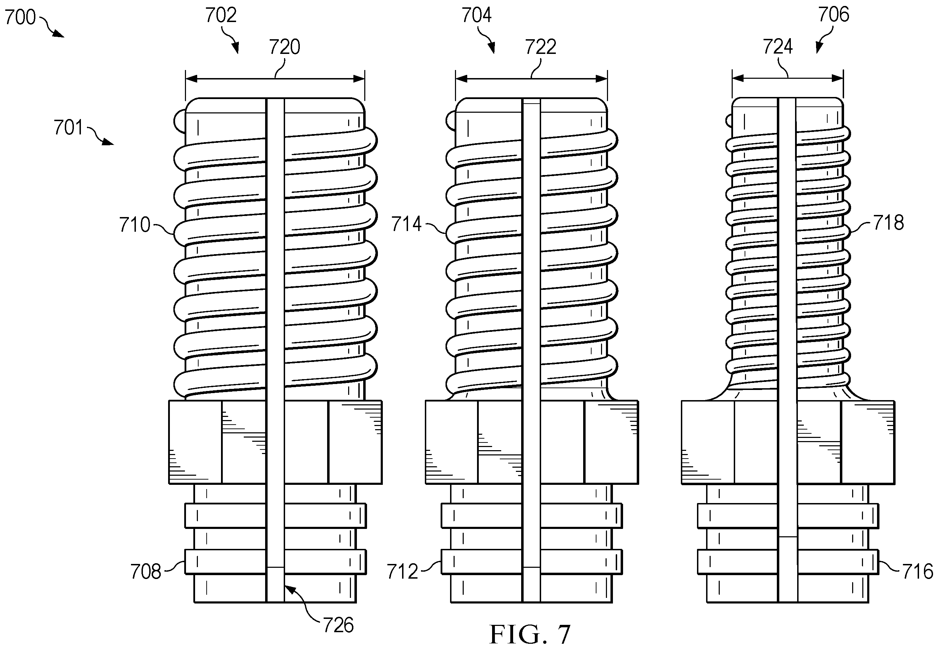

Turning now to **Figure 7****,** an illustration of a side view of multiple adapters is depicted in accordance with an illustrative embodiment. Adapters **701** of **Figure 7** can be a physical implementation of adapters for number of adapters **218** or number of adapters **220.** In some illustrative examples, at least one adapter of adapters **701** can be used in fiber management system **301** in **Figure 3****.** In some illustrative examples, adapters **701** can be used in conjunction with manifold **402** of **Figures 4-6****.**

In view **700,** adapters **701** are aligned to more easily compare the components. Each of adapters **701** has a different design than each other of adapters **701.** Adapters **701** include adapter **702,** adapter **704,** and adapter **706.** Adapter **702** has locking feature **708** and threaded connection **710.** Adapter **704** has locking feature **712** and threaded connection **714.** Adapter **706** has locking feature **716** and threaded connection **718.** Locking feature **708,** locking feature **712,** and locking feature **716** are each the same. Locking feature **708,** locking feature **712,** and locking feature **716** allow for adapters **701** to be interchangeable in a manifold. In some illustrative examples, locking feature **708,** locking feature **712,** and locking feature **716** are referred to as universal locking features.

Threaded connection **710,** threaded connection **714,** and threaded connection **718** are configured to connect to different diameters of corrugated conduits. As depicted, threaded connection **710** has a larger diameter and a thicker thread than threaded connection **714** and threaded connection **718.** Threaded connection **710** has diameter **720.** Diameter **720** is larger than diameter **722** and diameter **724.** Adapter **702** is configured to connect to a corrugated conduit with a largest diameter. As depicted, threaded connection **714** has diameter **722** smaller than diameter **720.** Threaded connection **718** has a smallest diameter and narrowest threads of adapters **701.** Threaded connection **718** has diameter **724.**

In this illustrative example, each of plurality of adapters **701** comprises a slot. In this illustrative example, adapter **702** comprises slot **726.** Slot **726** can stop adapter **702** from rotating in a manifold. In some illustrative examples, slot **726** can act as a keying feature. Fibers extending through adapter **702** may twist if adapter **702** spins. Preventing spinning can maintain quality of the fibers. In some illustrative examples, slot **726** allows fibers to be inserted into the fiber management system.

Slot **726** can reduce compression on the adapter. Slot **726** can allow for a manifold to compress adapter **702** to hold adapter **702** within the manifold without undesirably damaging adapter **702.**

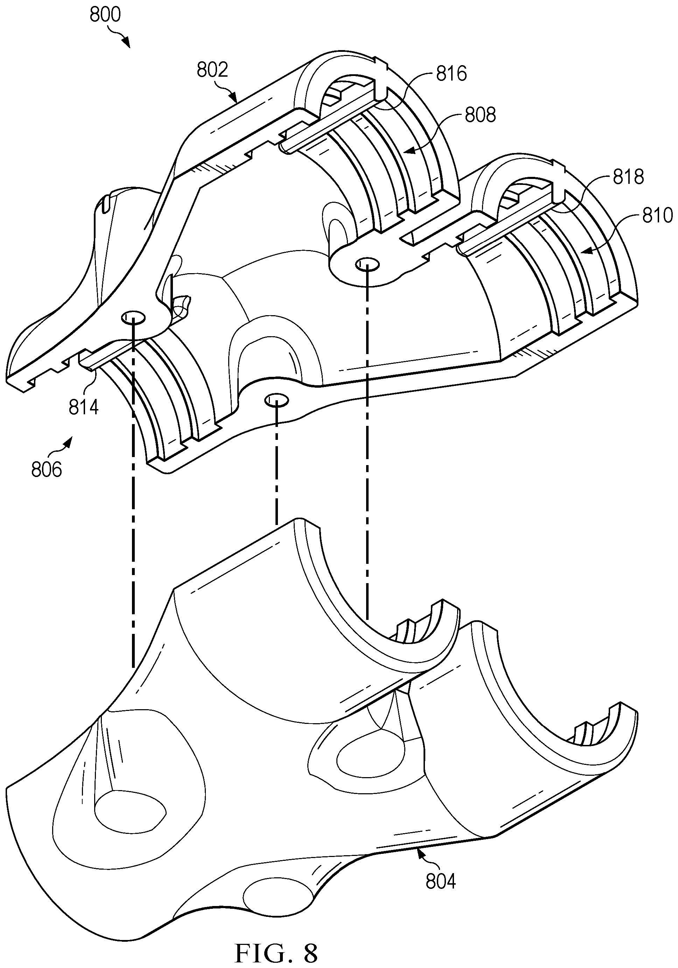

Turning now to **Figure 8****,** an illustration of a bottom view of a manifold with anti-rotation features is depicted in accordance with an illustrative embodiment. Manifold **800** is a physical implementation of manifold **202** of **Figure 2****.** In some illustrative examples, manifold **800** can be the same as manifold **302** of **Figure 3****.** Manifold **800** can be the same as manifold **402** of **Figures 4-6****.** In some illustrative examples, manifold **800** can be used with adapters **701** of **Figure 7****.**

Manifold **800** comprises first half **802** and second half **804** removably connected to first half **802** to form a volume within manifold **800.** Manifold **800** comprises a first number of openings on a first end to access the volume. In this illustrative example, the first number of openings comprises opening **806.** Manifold **800** comprises a second number of openings on a second end to access the volume. In this illustrative example, the second number of openings comprises opening **808** and opening **810.** Each of the openings has an anti-rotation feature. Opening **806** has anti-rotation feature **814.** Opening **808** has anti-rotation feature **816.** Opening **810** has anti-rotation feature **818.**

Each anti-rotation feature can prevent rotation of a respective adapter and corrugated conduit. In some illustrative examples, each anti-rotation feature can act as a keying feature.

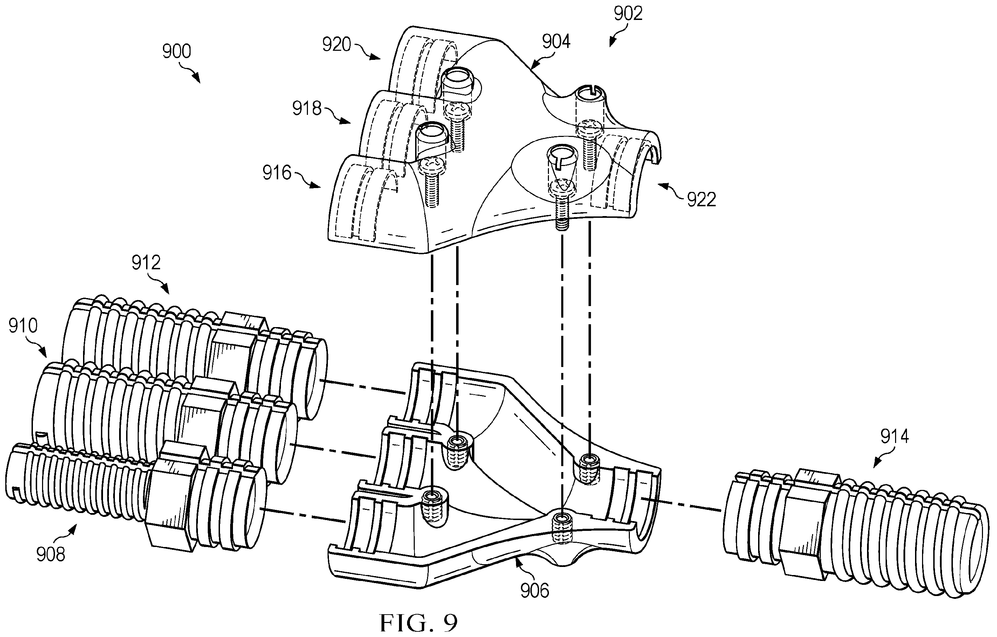

Turning now to **Figure 9****,** an illustration of an exploded isometric view of a manifold and adapters is depicted in accordance with an illustrative embodiment. Manifold **902** in view **900** is a physical implementation of manifold **202** of **Figure 2****.** In some illustrative examples, manifold **902** is the same as manifold **304** of **Figure 3****.** Manifold **902** can be used within aircraft 100 to run wires, such as electrical wires or fiber optics. In some illustrative examples, manifold **902** can be a portion of maintenance equipment used for testing of components of aircraft **100.** Manifold **902** can be referred to as a 3/1 manifold.

Manifold **902** comprises first half **904** and second half **906.** Separating first half **904** and second half **906** cleaves each of opening **916,** opening **918,** opening **920,** and opening **922.** A plurality of adapters can be used to connect a plurality of corrugated conduits to manifold **902.** In this illustrative example, the plurality of adapters comprises adapter **908,** adapter **910,** adapter **912,** and adapter **914.** Each of the plurality of adapters is interchangeable due to the same locking features. Each adapter can be selected based on a size of a corrugated conduit.

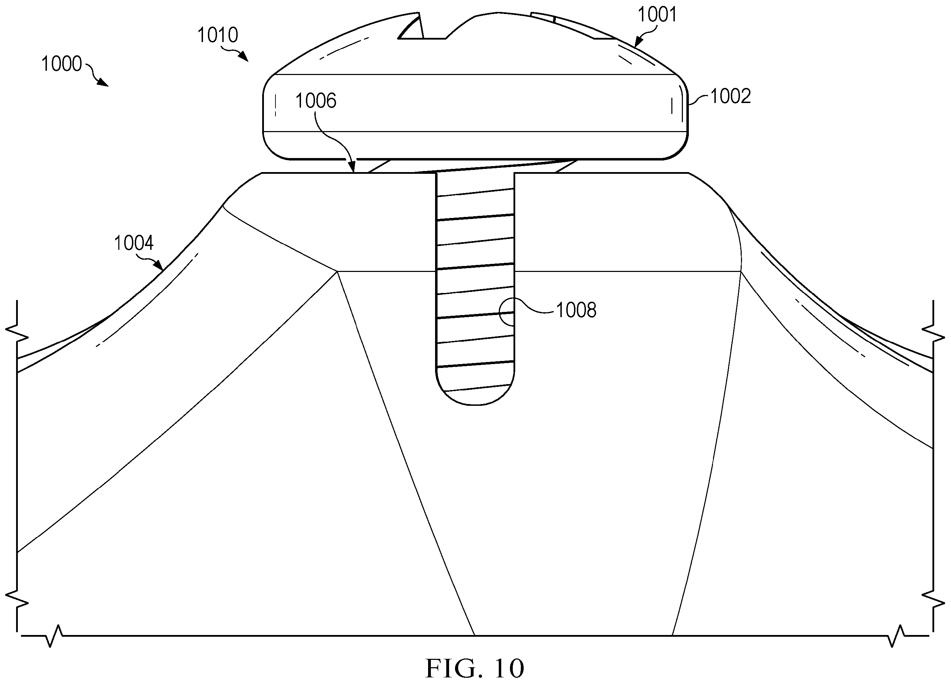

Turning now to **Figure 10****,** an illustration of a side view of a fastener prior to installation as a captive fastener is depicted in accordance with an illustrative embodiment. In some illustrative examples, fastener **1001** and structure **1004** can be components of aircraft **100** of **Figure 1****.** In some illustrative examples, structure **1004** can be a physical implementation of manifold **202** of **Figure 2****.** In some illustrative examples, structure **1004** can be a portion of manifold **402** of **Figures 4-6****.** In some illustrative examples, structure **1004** can be a portion of manifold **800** of **Figure 8****.** In some illustrative examples, structure **1004** can be a portion of manifold **902** of **Figure 9****.**

View **1000** is a view of fastener **1001** prior to being installed in structure **1004** as a captive fastener. In view **1000,** a shank portion of fastener **1001** extends into structure **1004.** Head **1002** of fastener **1001** is outside of structure **1004.**

The shank portion of fastener **1001** is extending through expandable opening **1006.** Expandable opening **1006** is configured to expand to allow head **1002** of fastener **1001** through expandable opening **1006.** Slot **1008** in structure **1004** allows for expansion of expandable opening **1006** to allow entry of head **1002** of fastener **1001.**

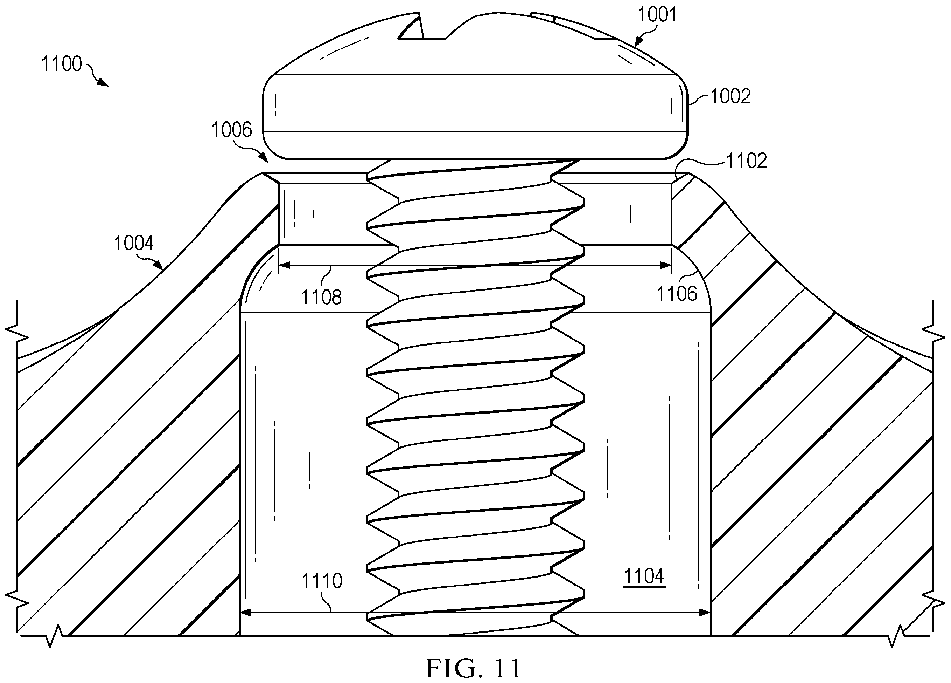

Turning now to **Figure 11****,** an illustration of a cross-sectional view of a fastener prior to installation as a captive fastener in a channel is depicted in accordance with an illustrative embodiment. View **1100** is a cross-sectional view of structure **1004.** In view **1100,** chamfer **1102** of expandable opening **1006** is visible. Chamfer **1102** allows for easier entry of head **1002** of fastener **1001.**

Channel **1104** in structure **1004** is visible in view **1100.** Channel **1104** comprises edge blend **1106** configured to retain head **1002** of fastener **1001.** Edge blend **1106** can be referred to as an upper inner edge blend. Edge blend **1106** improves captive function while allowing for intentional removal of fasteners for replacement. Edge blend **1106** within channel **1104** leads towards expandable opening **1006.**

Expandable opening **1006** has initial diameter **1108** and is connected to channel **1104.** Channel **1104** has internal diameter **1110** larger than initial diameter **1108.** Channel also has an exit diameter (not depicted) configured to retain head **1002** of fastener **1001** inside channel **1104.** Internal diameter **1110** of channel **1104** is configured to allow movement of head **1002** within channel **1104.**

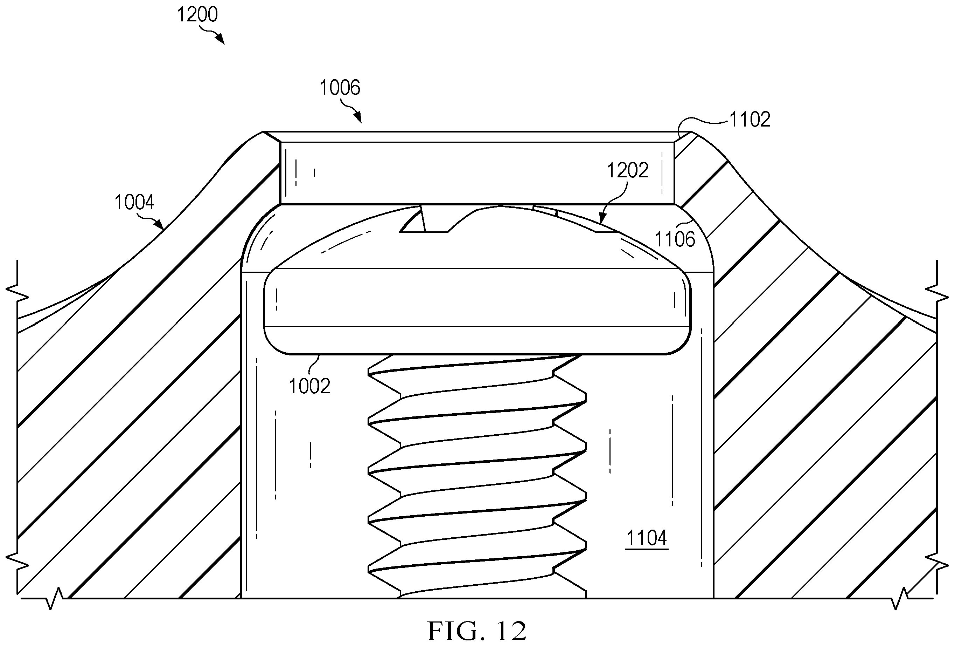

Turning now to **Figure 12****,** an illustration of a cross-sectional view of a captive fastener within a channel is depicted in accordance with an illustrative embodiment. In view **1200,** fastener **1001** has been sent through expandable opening **1006** and into channel **1104.** In view **1200,** fastener **1001** is referred to as captive fastener **1202.** Head **1002** of fastener **1001** is restrained within channel **1104.**

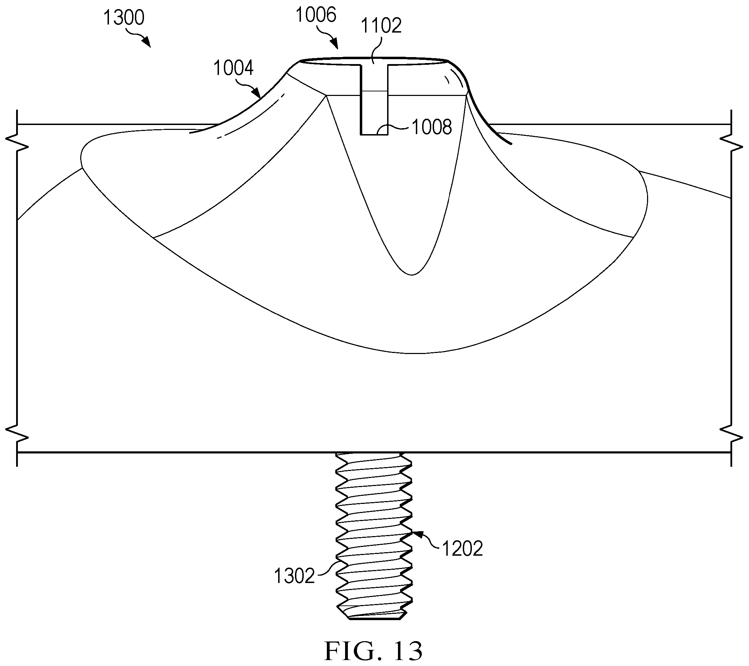

Turning now to **Figure 13****,** an illustration of a view of a structure with a captive fastener within a channel is depicted in accordance with an illustrative embodiment. In view **1300,** shaft **1302** of captive fastener **1202** extends outside of structure **1004.** Head **1002** of captive fastener **1202** is not visible in view **1300.** In view **1300,** head **1002** of captive fastener **1202** is retained within channel **1104.** Captive fastener **1202** can be used to join structure **1004** to another structure.

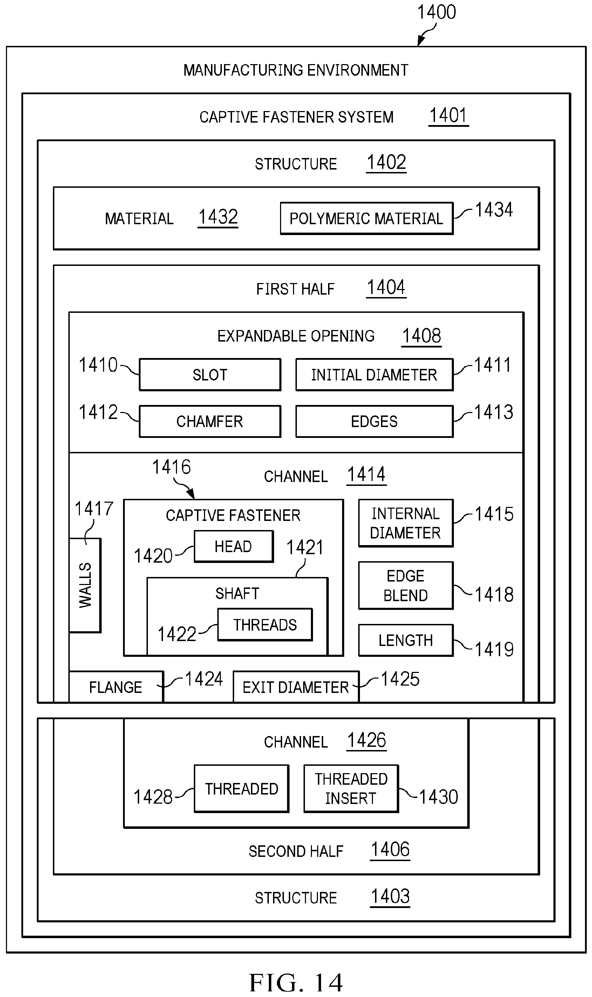

Turning now to **Figure 14****,** an illustration of a block diagram of a manufacturing environment is depicted in accordance with an illustrative embodiment. Captive fastener system **1401** can be used in aircraft **100** of **Figure 1****.** Captive fastener system **1401** can be used in fiber management system **201** of **Figure 2****.** Captive fastener system **1401** can include captive fasteners **276** of **Figure 2****.** Captive fastener system **1401** can be used in manifold **302** or manifold **304** of **Figure 3****.** Captive fastener system **1401** can be used in manifold **402** of **Figures 4-6****.** Captive fastener system **1401** can be used in manifold **800** of **Figure 8****.** Captive fastener system **1401** can be used in manifold **902** of **Figure 9****.** Captive fastener system **1401** can comprise fastener **1001** and channel **1104** of structure **1004** in **Figures 10-13****.**

Captive fastener system **1401** can be assembled in manufacturing environment **1400.** Captive fastener system **1401** comprises channel **1414** and expandable opening **1408** with initial diameter **1411** connected to channel **1414.** Channel **1414** has internal diameter **1415** larger than initial diameter **1411** and exit diameter **1425** configured to retain head **1420** of captive fastener **1416** inside the channel **1414.**

Features of channel **1414** and expandable opening **1408** are configured to allow controlled insertion of captive fastener **1416** and intentional removal of captive fastener **1416.** Features of channel **1414** and expandable opening **1408** are configured to retain captive fastener **1416** within channel **1414.** Retaining captive fastener **1416** within channel **1414** reduces or eliminates foreign object debris (FOD).

In some illustrative examples, the features of channel **1414** comprise edge blend **1418.** In some illustrative examples, edge blend **1418** is present within channel **1414** leading towards expandable opening **1408.** In some illustrative examples, captive fastener system **1401** comprises edge blend **1418** within channel **1414** on an opposite end from exit diameter **1425.** In some illustrative examples, edge blend **1418** retains head **1420** within channel **1414.** In some illustrative examples, edge blend **1418** is configured to aid in controlled removal of captive fastener **1416** from channel **1414.** In some illustrative examples, edge blend **1418** is configured based on a size and shape of head **1420.**

In some illustrative examples, the features of expandable opening **1408** comprise chamfer **1412.** In some illustrative examples, chamfer **1412** on expandable opening **1408** is configured to allow for insertion of head **1420** into channel **1414.**

In some illustrative examples, the features of expandable opening **1408** comprise slot **1410.** In some illustrative examples, slot **1410** is in structure **1402** extending from expandable opening **1408** towards channel **1414.** In some illustrative examples, slot **1410** allows for expandable opening **1408** to increase from initial diameter **1411** to a size large enough to allow head **1420** to enter channel **1414.**

Channel **1414** has length **1419.** In some illustrative examples, length **1419** of channel **1414** is sufficient to fully house captive fastener **1416** including shaft **1421** and head **1420.** In some illustrative examples, length **1419** of channel **1414** is sufficiently long so that threads **1422** are not protruding from structure **1402.** In some illustrative examples, structure **1402** can be described as first half **1404** of an assembly such as a manifold. Length **1419** of channel **1414** can enable mating of structure **1402** and structure **1403** without potential foreign object debris. Length **1419** of channel **1414** can enable mating of structure **1402** and structure **1403** without captive fastener **1416** inadvertently damaging structure **1403.**

Structure **1402** is formed of material **1432** configured to allow for insertion and removal of captive fastener **1416** without damage to structure **1402.** In some illustrative examples, material **1432** is configured to provide sufficient flexibility to allow for insertion and removal of captive fastener **1416** without damage to structure **1402.** In some illustrative examples, material **1432** comprises polymeric material **1434.** In some illustrative examples, edges **1413** of expandable opening **1408** and walls **1417** of the channel **1414** are formed by polymeric material **1434.**

Internal diameter **1415** of the channel is configured to allow movement of the head **1420** within channel **1414.** Exit diameter **1425** is smaller than internal diameter **1415.** Exit diameter **1425** is formed by any desirable feature of channel **1414.** In some illustrative examples, exit diameter **1425** is defined by flange **1424** extending inwardly in channel **1414.**

In some illustrative examples, captive fastener system **1401** comprises channel **1414** and captive fastener **1416** with head **1420** positioned within channel **1414.** Channel **1414** has expandable opening **1408** configured to allow entry of head **1420** of captive fastener **1416** and limit exit of head **1420** of captive fastener **1416** and exit diameter **1425** configured to allow shaft **1421** of captive fastener **1416** to extend through exit diameter **1425** and prevent exit of head **1420** of captive fastener **1416.**

Structure **1402** can be joined to structure **1403** by captive fastener **1416.** Structure **1403** comprises channel **1426** that receives captive fastener **1416.** In some illustrative examples channel **1426** is threaded to engage with threads **1422** of captive fastener **1416.** In other illustrative examples, threaded insert **1430** is present in channel **1426.** When threaded insert **1430** is present in channel **1426,** threaded insert **1430** is configured to engage with threads **1422** of captive fastener **1416.** In some illustrative examples, structure **1403** can be described as second half **1406** of an assembly.

The illustration of manufacturing environment **1400** in **Figure 14** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, structure **1403** can be formed of the same material as material **1432** of structure **1402.** In other illustrative examples, structure **1403** can be formed of a different material as material **1432** of structure **1402.**

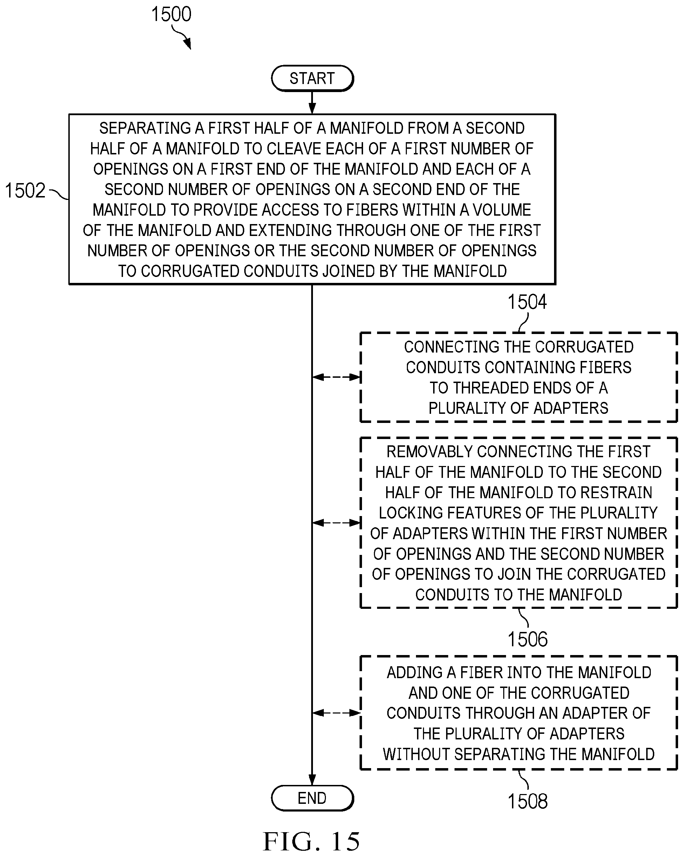

Turning now to **Figure 15****,** a flowchart of a method of managing fibers is depicted in accordance with an illustrative embodiment. Method **1500** can be performed to manage fibers of aircraft **100** of **Figure 1****.** Method **1500** can be performed to manage optical fibers **274** of **Figure 2****.** Method **1500** can be performed using fiber management system **201** of **Figure 2****.** Method **1500** can be performed using fiber management system **301** of **Figure 3****.** Method **1500** can be performed using manifold **402 of** **Figures 4-6****.** Method **1500** can be performed using adapters **701** of **Figure 7****.** Method **1500** can be performed using manifold **800** of **Figure 8****.** Method **1500** can be performed using manifold **902** of **Figure 9****.** Captive fastener system **1010** of **Figures 10-13** can be used in method **1500** to connect or disconnect the manifold. Captive fastener system **1401** of **Figure 14** can be used in method **1500** to connect or disconnect the manifold.

Method **1500** separates a first half of a manifold from a second half of a manifold to cleave each of a first number of openings on a first end of the manifold and each of a second number of openings on a second end of the manifold to provide access to fibers within a volume of the manifold and extending through one of the first number of openings or the second number of openings to corrugated conduits joined by the manifold (operation **1502).** Afterwards, method **1500** terminates.

In some illustrative examples, method **1500** connects the corrugated conduits containing fibers to threaded ends of a plurality of adapters (operation **1504).** In some illustrative examples, method **1500** removably connects the first half of the manifold to the second half of the manifold to restrain locking features of the plurality of adapters within the first number of openings and the second number of openings to join the corrugated conduits to the manifold (operation **1506).** By the locking features being non-threaded, the corrugated conduits are not twisted connecting the plurality of adapters to the manifold.

In some illustrative examples, method **1500** adds a fiber into the manifold and one of the corrugated conduits through an adapter of the plurality of adapters without separating the manifold (operation **1508).** In some illustrative examples, a slot within the adapter allows for insertion of a fiber through the adapter without separating the manifold. In some illustrative examples, insertion of the fiber can be viewed through a transparent or translucent material of the manifold.

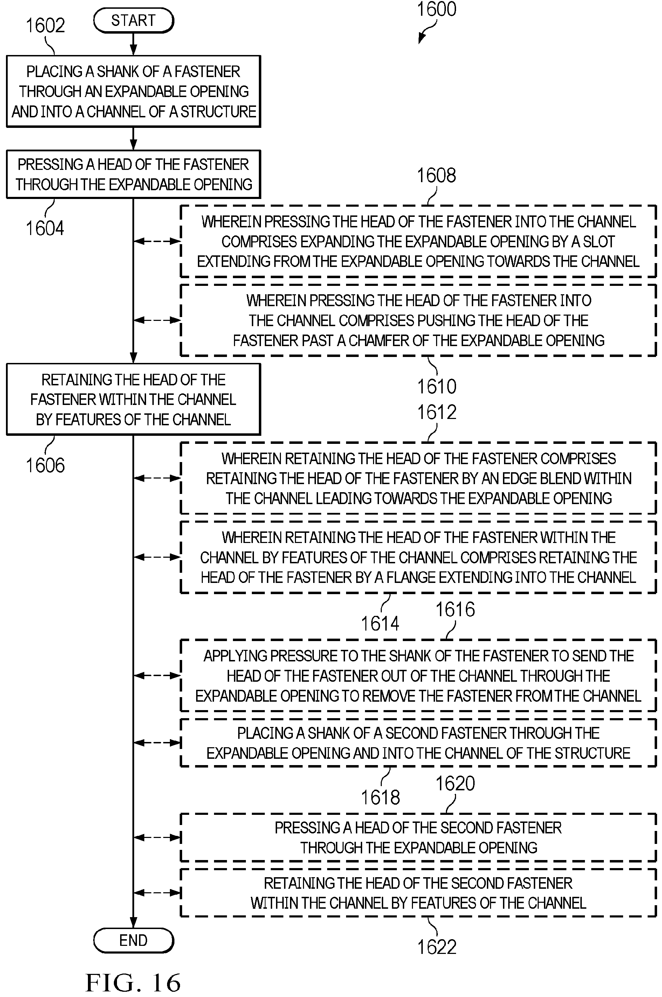

Turning now to **Figure 16****,** a flowchart of a method of installing a captive fastener is depicted in accordance with an illustrative embodiment. Method **1600** can be performed to install a captive fastener in aircraft **100** of **Figure 1****.** Method **1600** can be performed to install captive fasteners **276** of **Figure 2****.** Method **1600** can be performed to install captive fasteners in fiber management system **301** of **Figure 3****.** Method **1600** can be performed to install captive fasteners in manifold **402** of **Figures 4-6****.** Method **1600** can be performed to install captive fasteners in manifold **800** of **Figure 8****.** Method **1600** can be performed using manifold **902** of **Figure 9****.** Captive fastener system **1010** of **Figures 10-13** can be used in method **1600** to connect or disconnect the manifold. Captive fastener system **1401** of **Figure 14** can be used in method **1600** to connect or disconnect the manifold.

Method **1600** places a shank of a fastener through an expandable opening and into a channel of a structure (operation **1602).** Method **1600** presses a head of the fastener through the expandable opening (operation **1604).** Method **1600** retains the head of the fastener within the channel by features of the channel (operation **1606).** Afterwards, method **1600** terminates.

In some illustrative examples, pressing the head of the fastener into the channel comprises expanding the expandable opening by a slot extending from the expandable opening towards the channel (operation **1608).** In some illustrative examples, pressing the head of the fastener into the channel comprises pushing the head of the fastener past a chamfer of the expandable opening (operation **1610).** In some illustrative examples, the chamfer aids in inserting the head through the expandable opening.

In some illustrative examples, retaining the head of the fastener comprises retaining the head of the fastener by an edge blend within the channel leading towards the expandable opening (operation **1612).** In some illustrative examples, retaining the head of the fastener within the channel by features of the channel comprises retaining the head of the fastener by a flange extending into the channel (operation **1614).**

In some illustrative examples, method **1600** applies pressure to the shank of the fastener to send the head of the fastener out of the channel through the expandable opening to remove the fastener from the channel (operation **1616).** In some illustrative examples, method **1600** places a shank of a second fastener through the expandable opening and into the channel of the structure (operation **1618).** In some illustrative examples, method **1600** presses a head of the second fastener through the expandable opening (operation **1620).**

In some illustrative examples, method **1600** retains the head of the second fastener within the channel by features of the channel (operation **1622).** In some illustrative examples, the features of the channels can include at least one of a flange forming an exit diameter. In some illustrative examples, the features of the channels can include an edge blend.

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1504** through operation **1508** may be optional. As another example, operation **1608** through operation **1622** may be optional.

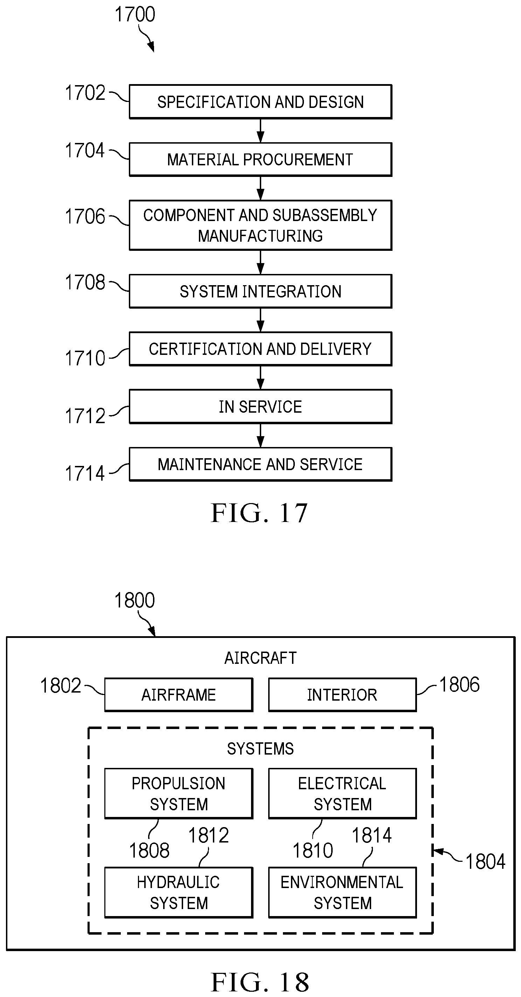

Illustrative embodiments of the present disclosure may be described in the context of aircraft manufacturing and service method **1700** as shown in **Figure 17** and aircraft **1800** as shown in **Figure 18****.** Turning first to **Figure 17****,** an illustration of an aircraft manufacturing and service method in a form of a block diagram is depicted in accordance with an illustrative embodiment. During pre-production, aircraft manufacturing and service method **1700** may include specification and design **1702** of aircraft **1800** in **Figure 18** and material procurement **1704.**

During production, component and subassembly manufacturing **1706** and system integration **1708** of aircraft **1800** takes place. Thereafter, aircraft **1800** may go through certification and delivery **1710** in order to be placed in service **1712.** While in service **1712** by a customer, aircraft **1800** is scheduled for routine maintenance and service **1714,** which may include modification, reconfiguration, refurbishment, or other maintenance and service.

Each of the processes of aircraft manufacturing and service method **1700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 18****,** an illustration of an aircraft in a form of a block diagram is depicted in which an illustrative embodiment may be implemented. In this example, aircraft **1800** is produced by aircraft manufacturing and service method **1700** of **Figure 17** and may include airframe **1802** with plurality of systems **1804** and interior **1806.** Examples of systems **1804** include one or more of propulsion system **1808,** electrical system **1810,** hydraulic system **1812,** and environmental system **1814.** Any number of other systems may be included.

Apparatuses and methods embodied herein may be employed during at least one of the stages of aircraft manufacturing and service method **1700.** One or more illustrative embodiments may be manufactured or used during at least one of component and subassembly manufacturing **1706,** system integration **1708,** in service **1712,** or maintenance and service **1714** of **Figure 17****.**

The illustrative examples recognize and take into account one or more considerations. The illustrative examples recognize and take into account that wire assemblies and fiber optic assemblies are used to deliver electricity and data in platforms. The wire assemblies can include long stretches of tubing arranged in branches and connections between the branches.

The illustrative examples recognize and take into account that wire assembly uses multiple fabricators and labor hours to twist long stretches (30ft +/-) of tubing for installing each branch for initial fabrication. Current designs are disassembled entirely to add or modify tubing count or size. Modifying or repairing fiber cable assemblies using current fabrication techniques can involve undesirable amounts of time and resources due to the complete disassembly from connectors to current manifolds.

The illustrative examples recognize and take into account that it would be desirable to have a method and apparatus to enable repair or redesign of a fiber or wire assembly without complete disassembly.

The illustrative examples present a manifold for connecting corrugated conduits. The illustrative examples present fiber management systems and methods of managing fibers. A fiber tubing manifold adapter is a multipiece variable input/output component that allows the fabrication and repair of fiber cables to be built up pre and post termination of the connectors. The illustrative examples can be utilized with a plurality of sizes of tubing. The illustrative examples allow for installation of fibers/wires after pin & socket termination of connector.

The illustrative examples also present a captive fastener system. The captive fastener system design features a tapered variable size opening that accepts mounting hardware during installation while keeping hardware captive upon rework. The captive fastener hardware designs eliminate potential FOD due to loose fasteners.

The illustrative examples allow for inspection, modification, and repair of fiber assemblies without completely disassembling the cable assembly from connector to the Y adapter. In some illustrative examples, the manifold enables visual inspection without disassembly of the manifold. In some illustrative examples, visual inspection can be performed when the manifold is at least one of transparent, nearly transparent, or translucent.

In some illustrative examples, the manifold provides the ability to add additional fiber and branches while keeping the remaining assembly intact. For example, when going from 2 branches to 3 branches, to add or modify tubing count or size the modular multi size and variable input/output design that maintains the existing parts allowing for the most adaptable solution.

The illustrative examples save the labor time for fabrication, modification and repair. The illustrative examples also increase quality by reducing the chance of damaged product. The illustrative examples reduce or eliminate the twisting of outer conduit tubing.

The illustrative examples are directed to a fiber tubing manifold having a multipiece variable input/output component which allows the fabrication and repair of fiber cables to be built up pre and post termination of the connectors. The current design is not constrained by size of tubing and installation of product is not limited to before pin & socket termination of connector. The illustrative examples include a modular manifold having a two-piece body and variable size branches that allow the ability to inspect, modify, and repair assembly without disassembly anywhere else in the system. The illustrative examples eliminate the twisting of tubing to allow each branch to be standalone until reassembly with the manifold body.

The captive fastener design maintains the fastener within the manifold in the event that the fastener becomes loose during installation or rework. Captive fastener design can be used on a multitude of pieces to be connected together.

The illustrative examples can be used with any conductor and fiber cables running through a corrugated conduit that includes a split or junction. The illustrative examples are suitable for applications with weight constraints where lightweight tubing is used. The illustrative examples can be used in aircraft, ships, buildings, spacecraft, ergonomics, or other fields in which weight constraints are a concern.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The description includes the following clauses:
1. A captive fastener system comprising:
   an expandable opening with an initial diameter connected to a channel; and
   the channel, wherein the channel has an internal diameter larger than the initial diameter and an exit diameter configured to retain a head of a fastener inside the channel.
2. The captive fastener system of clause 1 further comprising:
   an edge blend within the channel leading towards the expandable opening.
3. The captive fastener system of clause 1 or clause 2 further comprising:
   a chamfer on the expandable opening.
4. The captive fastener system of any of clauses 1 to 3 further comprising:
   a slot extending from the expandable opening towards the channel.
5. The captive fastener system of any of clauses 1 to 4, wherein the exit diameter is defined by a flange extending inwardly in the channel.
6. The captive fastener system of any of clauses 1 to 5, wherein edges of the expandable opening and walls of the channel are formed by a polymeric material.
7. A method of installing a captive fastener comprising:
   placing a shank of a fastener through an expandable opening and into a channel of a structure;
   pressing a head of the fastener through the expandable opening; and
   retaining the head of the fastener within the channel by features of the channel.
8. The method of clause 7, wherein pressing the head of the fastener into the channel comprises expanding the expandable opening by a slot extending from the expandable opening towards the channel.
9. The method of clause 7 or clause 8, wherein pressing the head of the fastener into the channel comprises pushing the head of the fastener past a chamfer of the expandable opening.
10. The method of any of clauses 7 to 9, wherein retaining the head of the fastener comprises retaining the head of the fastener by an edge blend within the channel leading towards the expandable opening.
11. The method of any of clauses 7 to 10, wherein retaining the head of the fastener within the channel by features of the channel comprises retaining the head of the fastener by a flange extending into the channel.
12. The method of any of clauses 7 to 11 further comprising:
   applying pressure to the shank of the fastener to send the head of the fastener out of the channel through the expandable opening to remove the fastener from the channel.
13. The method of clause 12 further comprising:
   placing a shank of a second fastener through the expandable opening and into the channel of the structure;
   pressing a head of the second fastener through the expandable opening; and
   retaining the head of the second fastener within the channel by features of the channel.
13A. The method of any of clauses 7 to 13, wherein the method is performed using the captive fastener system of any of clauses 1 to 6 and 14 to 21.
14. A captive fastener system comprising:
   a fastener with a head positioned within a channel; and
   the channel, wherein the channel has an expandable opening configured to allow entry of the head of the fastener and limit exit of the head of the fastener and an exit diameter configured to allow a shaft of the fastener to extend through the exit diameter and prevent exit of the head of the fastener.
15. The captive fastener system of clause 14 further comprising:
   an edge blend within the channel on an opposite end from the exit diameter.
16. The captive fastener system of clause 14 or clause 15 further comprising:
   a chamfer on the expandable opening.
17. The captive fastener system of any of clauses 14 to 16 further comprising:
   a slot extending from the expandable opening into the channel.
18. The captive fastener system of any of clause 14 to 17, wherein the exit diameter is defined by a flange extending inwardly in the channel.
19. The captive fastener system of any of clauses 14 to 18, wherein an internal diameter of the channel is configured to allow movement of the head within the channel.
20. The captive fastener system of any of clauses 14 to 19, wherein edges of the expandable opening and walls of the channel are formed by a polymeric material.

## Claims

1. A captive fastener system (277, 1401) comprising:
an expandable opening (278, 602, 1006, 1408) with an initial diameter (1108, 1411) connected to a channel (1104, 1414); and
the channel (1104, 1414), wherein the channel (1104, 1414) has an internal diameter (1110, 1415) larger than the initial diameter (1108, 1411) and an exit diameter (1425) configured to retain a head (1002, 1420) of a fastener (1001, 1416) inside the channel (1104, 1414).

2. The captive fastener system (277, 1401) of claim 1 further comprising:
an edge blend (1106, 1418) within the channel (1104, 1414) leading towards the expandable opening (278, 602, 1006, 1408).

3. The captive fastener system (277, 1401) of claim 1 or claim 2 further comprising:
a chamfer (284, 1102, 1412) on the expandable opening (278, 602, 1006, 1408).

4. The captive fastener system (277, 1401) of any of claims 1 to 3 further comprising:
a slot (282, 1008, 1410) extending from the expandable opening (278, 602, 1006, 1408) towards the channel (1104, 1414).

5. The captive fastener system (277, 1401) of any of claims 1 to 4, wherein the exit diameter (1425) is defined by a flange (1424) extending inwardly in the channel (1104, 1414).

6. The captive fastener system (277, 1401) of any of claims 1 to 5, wherein edges (1413) of the expandable opening (278, 602, 1006, 1408) and walls (1417) of the channel (1104, 1414) are formed by a polymeric material (292, 1434).

7. A method (1600) of installing a captive fastener (276, 1001, 1202, 1416) comprising:
placing (1602) a shank of a fastener (1001) through an expandable opening (278, 602, 1006, 1408) and into a channel (1104, 1414) of a structure (1004, 1402);
pressing (1604) a head (1002, 1420) of the fastener (1001) through the expandable opening (278, 602, 1006, 1408); and
retaining (1606) the head (1002, 1420) of the fastener (1001, 1416) within the channel (1104, 1414) by features of the channel (1104, 1414).

8. The method (1600) of claim 7, wherein (1608) pressing the head (1002, 1420) of the fastener (1001) into the channel (1104, 1414) comprises expanding the expandable opening (278, 602, 1006, 1408) by a slot (282, 1008, 1410) extending from the expandable opening (278, 602, 1006, 1408) towards the channel (1104, 1414).

9. The method (1600) of claim 7 or claim 8, wherein (1610) pressing the head (1002, 1420) of the fastener (1001) into the channel (1104, 1414) comprises pushing the head (1002, 1420) of the fastener (1001) past a chamfer (284, 1102, 1412) of the expandable opening (278, 602, 1006, 1408).

10. The method (1600) of any of claims 7 to 9, wherein (1612) retaining the head (1002, 1420) of the fastener (1001) comprises retaining the head (1002, 1420) of the fastener (1001) by an edge blend (1106, 1418) within the channel (1104, 1414) leading towards the expandable opening (278, 602, 1006, 1408) and/or, wherein (1614) retaining the head (1002, 1420) of the fastener (1001, 1416) within the channel (1104, 1414) by features of the channel (1104, 1414) comprises retaining the head (1002, 1420) of the fastener (1001) by a flange (1424) extending into the channel (1104, 1414).

11. The method (1600) of any of claims 7 to 10 further comprising:
applying (1616) pressure to the shank of the fastener (1001) to send the head (1002, 1420) of the fastener (1001) out of the channel (1104, 1414) through the expandable opening (278, 602, 1006, 1408) to remove the fastener (1001, 1416) from the channel (1104, 1414), optionally, the method (1600) further comprising:
placing (1618) a shank of a second fastener through the expandable opening (278, 602, 1006, 1408) and into the channel (1104, 1414) of the structure (1004, 1402);
pressing (1620) a head of the second fastener through the expandable opening (278, 602, 1006, 1408); and
retaining (1622) the head of the second fastener within the channel (1104, 1414) by features of the channel (1104, 1414).

12. A captive fastener system (277, 1401) comprising:
a fastener (1001, 1416) with a head (1002, 1420) positioned within a channel (1104, 1414); and
the channel (1104, 1414), wherein the channel (1104, 1414) has an expandable opening (278, 602, 1006, 1408) configured to allow entry of the head (1002, 1420) of the fastener (1001, 1416) and limit exit of the head (1002, 1420) of the fastener (1001, 1416) and an exit diameter (1425) configured to allow a shaft (1302, 1421) of the fastener (1001, 1416) to extend through the exit diameter (1425) and prevent exit of the head (1002, 1420) of the fastener (1001, 1416).

13. The captive fastener system (277, 1401) of claim 12 further comprising one or more of:
an edge blend (1106, 1418) within the channel (1104, 1414) on an opposite end from the exit diameter (1425);
a chamfer (284, 1102, 1412) on the expandable opening (278, 602, 1006, 1408); and
a slot (282, 1008, 1410) extending from the expandable opening (278, 602, 1006, 1408) into the channel (1104, 1414).

14. The captive fastener system (277, 1401) of any of claims 12 to 13, wherein the exit diameter (1425) is defined by a flange (1424) extending inwardly in the channel (1104, 1414) and/or,
wherein edges (1413) of the expandable opening (278, 602, 1006, 1408) and walls (1417) of the channel (1104, 1414) are formed by a polymeric material (292, 1434).

15. The captive fastener system (277, 1401) of claims 12 to 14, wherein an internal diameter (1110, 1415) of the channel (1104, 1414) is configured to allow movement of the head (1002, 1420) within the channel (1104, 1414).
